**Europäisches Patentamt**

**European Patent Office**

**Office européen des brevets**

(19)

(11) Veröffentlichungsnummer : **0 363 948 B1**

# (12) EUROPÄISCHE PATENTSCHRIFT

(45) Veröffentlichungstag der Patentschrift :
**15.04.92 Patentblatt 92/16**

(51) Int. Cl.$^5$ : **B29C 45/17, B29C 45/16**

(21) Anmeldenummer : **89118957.3**

(22) Anmeldetag : **12.10.89**

(54) **Düse für Spritzgiessmaschinen.**

(30) Priorität : **13.10.88 DE 3834917**

(43) Veröffentlichungstag der Anmeldung :
**18.04.90 Patentblatt 90/16**

(45) Bekanntmachung des Hinweises auf die Patenterteilung :
**15.04.92 Patentblatt 92/16**

(84) Benannte Vertragsstaaten :
**AT BE CH DE ES FR GB IT LI NL SE**

(56) Entgegenhaltungen :
**EP-A- 0 250 080**

(73) Patentinhaber : **Klöckner Ferromatik Desma GmbH
Riegeler Strasse 4
W-7831 Malterdingen (DE)**

(72) Erfinder : **Bernhard, Achim
Birkenstrasse 21
W-6452 Hainburg 2 (DE)**

(74) Vertreter : **Kiefer, Winfried, Dipl.-Phys.
Klöckner-Werke Aktiengesellschaft
Patentabteilung Klöcknerstrasse 29
W-4100 Duisburg 1 (DE)**

## Beschreibung

Die Erfindung betrifft eine Düse für Spritzgießmaschinen nach den Merkmalen des Oberbegriffs des Hauptanspruchs 1.

Eine gattungsgemäße Düse ist bereits aus der DE-OS 21 06 546 bekannt. Diese Düse trägt jedoch als Ausgangskanal nur eine fest mit ihr verbundene Hohlnadel konstanter Länge, die bei geschlossener Form stets bis zur plastischen Seele des mittels einer anderen Düse zunächst eingespritzten Kunststoffes reicht, beim Öffnen der Form nach der Verfestigung des zuerst eingespritzten Kunststoffes jedoch stets eine Öffnung oder zumindest - wenn das zweite Medium eine weitere Kunststoffkomponente ist - eine deutliche Störung der Oberfläche in dem gespritzten Kunststoffartikel hinterläßt. Dasselbe gilt für die gleichgestalteten Ausführungsbeispiele der Figuren 1 und 2 der GB-PS 2 139 548.

Bei vielen spritzgegossenen Kunststoffartikeln sind derartige Öffnungen oder Störungen der Oberfläche jedoch unerwünscht. Diese Artikel müssen dann einer zusätzlichen Nachbehandlung unterzogen werden. Das gilt im übrigen auch für spritzgegossene Kunststoffartikel, die mit einer gattungsgemäßen Düse gemäß der britischen Patentanmeldung GB-A- 2 202 181 hergestellt werden, die mit einer einzelnen, axial verschiebbaren Hohlnadel arbeitet, wobei der Innenraum der Hohlnadel die mit einem Rückschlagventil versehene Zuleitung des zweiten Mediums zum Formhohlraum bildet, während die Außenseite der Hohlnadel mit der Innenseite des Düsenkörper-Hohlraums im zurückgezogenen Zustand einen Ringspalt im Bereich des Düsenmundes bildet, der - jedenfalls dann, wenn das zweite Medium ein Druckgas oder eine unter Druck stehende Flüssigkeit ist - allein der Druckentspannung des zweiten Mediums nach der Verfestigung des zuerst eingespritzten Kunststoffes dient.

Auch der Einsatz von - nicht mehr gattungsgemäßen - Zweikomponenten-Düsen gemäß der US-PS 4 101 617, der DE-PS 28 00 482 oder des Ausführungsbeispiels der Figur 5 in der GB-PS 2 139 548, bei denen während des Einspritzvorganges zumindest zeitweise mittels einer - axial verschiebbaren oder auch feststehenden - Hohlnadel ein zylindrischer Zentralstrang aus dem zweiten Medium von einem hohlzylindrischen Strang aus der die Außenhaut eines Kunststoffartikels bildenden Kunststoffschmelze umgeben wird, beseitigt das Problem der übrigbleibenden Öffnung oder zumindest deutlichen Störung der Oberfläche nicht. Entweder wird der Druck des zweiten Mediums bis zum Abbinden der äußeren Kunststoffschmelze in Form und Angußkanal von der Düse her aufrechterhalten - dann verbleibt im Anguß selbst eine Öffnung oder eine deutliche Störung der Oberfläche des Kunststoffartikels nach dem Entfernen des Angusses (vgl. beispielsweise Figuren 1-3, 1-4 sowie 2-1 bis 2-3 in der DE-PS 28 00 482 und das Ausführungsbeispiel in Figur 5 der GB-PS 2 139 548) - oder es wird nach dem Aufbau des vom zweiten Medium angefüllten Innenraumes des Kunststoffartikels im Formhohlraum ein Stopfen der äußeren Kunststoffschmelze nachgedrückt (vgl. Figur 3 der US-PS 4 101 617) - dann muß jedoch - jedenfalls dann, wenn das zweite Medium ein Druckgas oder eine unter Druck stehende Flüssigkeit ist - aus Sicherheitsgründen vor oder auch nach dem Öffnen der Form von außen eine zusätzliche Öffnung in den Kunststoffartikel gebohrt oder gestochen werden (vgl. ebenfalls Figuren 2 und 3 der US-PS 4 101 617). Darüber hinaus weisen Zweikomponenten-Düsen einen wesentlich komplizierteren konstruktiven Aufbau auf als Düsen für eine einzelne Komponente einer Spritzgießanlage, die gleichzeitig mehrere Komponenten verarbeitet, so daß es in vielen Fällen wartungsfreundlicher und preiswerter ist, eine Spritzgießanlage zur gleichzeitigen Verarbeitung von mehreren Komponenten mit mehreren Düsen für jeweils eine einzuspritzende Komponente anstatt mit einer einzigen Mehrkomponenten-Düse zu bestücken.

Die vorliegende Erfindung hat sich daher die Aufgabe gestellt, eine Düse für Spritzgießmaschinen zur Verfügung zu stellen, mit der ein zweites Medium in das Innere einer bereits teilweise oder vollständig in eine Spritzgießform eingespritzten ersten Kunststoffschmelze eingebracht werden kann, wobei diese Düse bei minimalem konstruktivem Aufbau einerseits das nahtlose Verschließen der Durchführungsöffnung für das zweite Medium durch die erste Kunststoffschmelze und andererseits - jedenfalls dann, wenn das zweite Medium ein Druckgas oder eine unter Druck stehende Flüssigkeit ist - die Druckentspannung des Innenraumes des Kunststoffartikels innerhalb der geschlossenen Form ohne externe Öffnung des Kunststoffartikels erlaubt.

Die Erfindung löst diese Aufgabe mit Hilfe der Merkmale des Hauptanspruchs 1.

Als besonders vorteilhaft erweist es sich dabei, daß die erfindungsgemäße Düse in ihrem formseitigen Ausgangskanal zwei konzentrisch angeordnete, sowohl gegenüber der Wand des Ausgangskanals der Düse bzw. einer ihn ggf. bis zur Formoberfläche fluchtend fortsetzenden Bohrung als auch untereinander paßgerecht in axialer Richtung verschiebbare Hohlnadeln führt, wobei die innere Hohlnadel an ihrem formseitigen Ende verschlossen ist, dafür jedoch in ihrer Seitenwand oberhalb ihres formseitigen Endes eine oder mehrere Ausgangsöffnungen aufweist, und vorzugsweise soweit in den Formhohlraum ausgefahren werden kann, daß die Ausgangsöffnungen etwa auf der mittleren Höhe zwischen den beiden Formoberflächen im Bereich des Ausgangskanals bzw. der Bohrung ihren Arbeitspunkt erreichen. Mit dieser Anordnung läßt sich die innere Hohlnadel als Zuführung für das zweite Medium benutzen, die zunächst ausreichend tief in eine bereits im Formhohlraum befindliche erste Kunststoffschmelze eingefahren werden kann, um dann das zweite Medium im wesentlichen parallel und symmetrisch zu den Formoberflächen in die erste Kunststoffschmelze einzuspritzen, während die äußere Hohlnadel zunächst soweit zurückgezogen bleibt, daß sich zwischen innerer Hohlnadel und der Wand des Ausgangs kanals der Düse bzw. einer ihn bis zur Formoberfläche fluchtend fortsetzenden Bohrung im Formwerkzeug eine für die spätere Ausbildung eines Verschlußpfopfens ausreichende Menge von Material der ersten Kunststoffschmelze abspeichern kann. Insbesondere dann, wenn das zweite Medium ein Druckgas oder eine unter Druck stehende Flüssigkeit ist, läßt sich die ausgefahrene innere Hohlnadel vorteilhafterweise darüber hinaus nach dem Ausbilden einer inneren Blase des zweiten Mediums in der ersten Kunststoffschmelze und dem Beginn des Aushärtens der Außenschicht aus der ersten Kunststoffschmelze für den Druckausgleich zwischen Innenraum des Kunststoffkörpers und der Atmosphäre verwenden.

Vorteilhaft ist auch, daß die Endflächen der beiden Hohlnadeln bei gleichzeitigem Ausfahren beider Hohlnadeln auf das Niveau der nächstgelegenen Formoberfläche diese nahezu störungsfrei ergänzen. Dies gestattet, die innere Hohlnadel nach dem Herbeiführen eines Druckausgleichs zwischen Innenraum des Kunststoffkörpers und Atmosphäre zunächst soweit zurückzufahren, daß die Endflächen beider Hohlnadeln auf gleichem Niveau liegen, um dann beide Hohlnadeln gemeinsam bis zur nächstgelegenen Formoberfläche auszufahren, wobei der zuvor zwischen innerer Hohlnadel und Wand des Ausgangskanals der Düse bzw. einer ihn fluchtend fortsetzenden Bohrung im Formwerkzeug gespeicherte Vorrat an Material der ersten Kunststoffschmelze als nahtloser Pfropfen in die Außenwand des Kunststoffkörpers gedrückt wird. Dies insbesondere dann, wenn in einer weiteren vorteilhaften Ausgestaltung der erfindungsgemäßen Düse die Wand ihres formseitigen Ausgangskanals bzw. einer ihn bis zur Formoberfläche fluchtend fortsetzenden Bohrung im Formwerkzeug mit einer speziellen Wärmeisolierung und/oder einer Heizvorrichtung versehen ist.

Weitere vorteilhafte Ausgestaltungen der erfindungsgemäßen Düse, insbesondere bezüglich eines einfachen konstruktiven Aufbaus und einer leichten Handhabbarkeit, werden durch die Merkmale der Unteransprüche 4 bis 7 sowie 11 in Verbindung mit den kennzeichnenden Merkmalen des Hauptanspruchs 1 bzw. anderer jeweils vorausgegangener Ansprüche gegeben.

Ein Ausführungsbeispiel einer erfindungsgemäßen Düse wird in der beigefügten Zeichnung dargestellt. Dabei zeigen:

Fig. 1: Schnitt durch eine erfindungsgemäße Düse in Seitenansicht.

Fig. 2: Stellung der Enden der Düsennadeln in verschiedenen Stadien eines Spritzgießvorganges mit einem zweiten Medium als Schnitt in Seitenansicht.

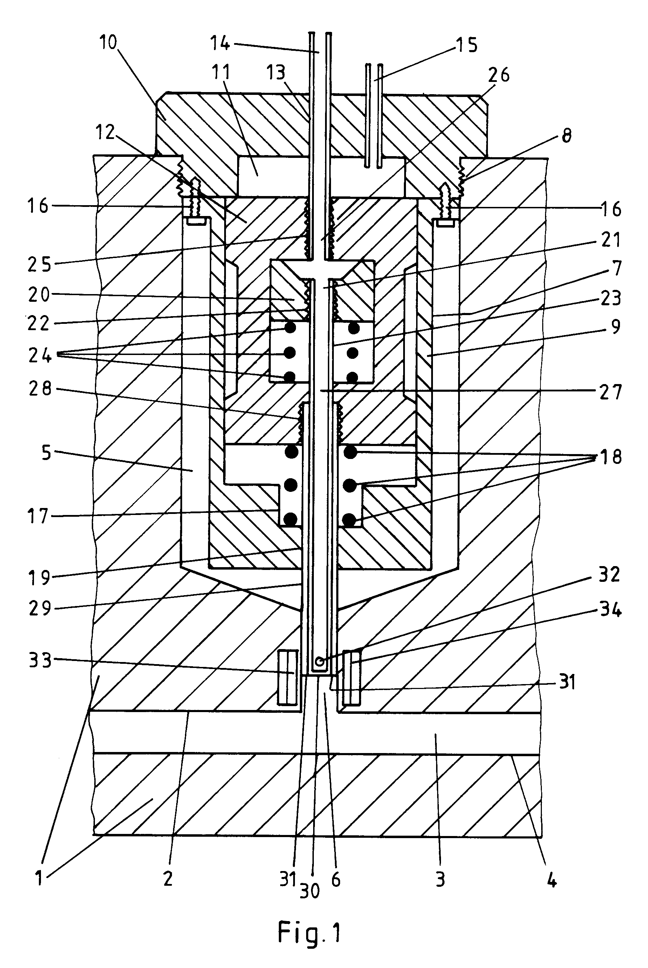

Die Fig. 1 zeigt einen Ausschnitt eines Formwerkzeuges 1 einer Spritzgießmaschine mit einem zwischen zwei Formoberflächen 2 und 4 eingeschlossenen Formhohlraum 3, der mittels einer nicht dargestellten Düse bekannter Art teilweise oder vollständig mit einer plastifizierten Kunststoffschmelze gefüllt werden kann. In einen Teil des Formwerkzeugs 1 ist eine Bohrung 5 eingelassen, die sich an ihrem formseitigen Ende verjüngt und dann in eine weitere Bohrung 6 mit kleinerem Durchmesser übergeht. In die Bohrung 5 ist eine Düse 7 eingesetzt, die in der Bohrung 5 mittels einer kraftschlüssigen Verbindung 8, beispielsweise eines Schraubgewindes, arretiert ist.

Die Düse 7 besteht zunächst aus einem zweiteiligen Düsengehäuse, das sich aus einem Düsenkörper 9 und einem Düsenkammerverschluß 10 zusammensetzt. Der Düsenkammerverschluß 10 ist im gezeigten Fall als Schraube, beispielsweise als eine solche mit einem Sechskant-Schraubenkopf, mit einer zentrischen Ausnehmung 11 ausgebildet, wobei der Innendurchmesser dieser zentrischen Ausnehmung 11 kleiner ist als derjenige eines im Düsenkörper 9 in axialer Richtung verschiebbaren Kolbens 12, so daß ein Teil der kopfabgewandten Schraubenendfläche als Anschlag für den Kolben 12 dient. Der Düsenkammerverschluß 10 weist im gezeigten Fall eine zentrische Bohrung 13 auf, die als Gleitdichtung für eine axial verschiebbare Zuleitung 14 zur Versorgung der Düse 7 mit dem in den Formhohlraum 3 einzuspritzenden zweiten Medium dient, und enthält außerdem eine kraftschlüssig mit ihm verbundene Zuleitung 15 für ein in die zentrische Ausnehmung 11 ein- bzw. aus ihr herauszuführendes pneumatisches oder hydraulisches Druckmedium. Der Düsenkammerverschluß 10 ist einerseits mittels der kraftschlüssigen Verbindung 8 in der Bohrung 5 arretiert und trägt andererseits mittels weiterer kraftschlüssiger Verbindungen 16 den Düsenkörper 9.

Der Düsenkörper 9 stellt im wesentlichen einen Hohlzylinder dar, in dem ein Kolben 12 axial verschiebbar ist. Am formseitigen Ende weist dieser Düsenkörper 9 zunächst eine Einschnürung 17 seines Innendurchmessers auf, die einen weiteren Anschlag für den Kolben 12 und den Sitz für eine hier nur angedeutete Feder 18 ausbildet, während eine nochmalige Einschnürung seines Innendurchmessers dann den formseitigen Ausgangskanal 19 der Düse 7 darstellt.

Der Kolben 12 ist ebenfalls ein mechanisch zu öffnender und kraftschlüssig zu verschließender Hohlzylinder, dessen Trennfuge und mögliche Ausführungsform einer kraftschlüssigen Verbindung in der vorliegenden Darstellung der Einfachheit halber jedoch nicht explizit gezeigt wird. Im inneren Hohlraum des Kolbens 12 befinden sich ein weiterer axial verschiebbarer Kolben 20 mit einer zentrischen Bohrung 21, in der mittels einer kraftschlüssigen Verbindung 22 eine in Richtung auf den Formhohlraum 3 aus dem Kolben 20 herausführende - innere - Hohlnadel 23 arretiert ist, und eine den Kolben 20 im Ruhezustand gegen das formabgewandte Ende des Hohlraums haltende Feder 24. Der innere Hohlraum des Kolbens 12 ist im dargestellten Fall an seinem formabgewandten Ende mit der Zuleitung 14 des zweiten Mediums verbunden, die mittels einer kraftschlüssigen Verbindung 25 in einer zentrischen Bohrung 26 im Kolben 12 verankert ist. Der Kolben 12 weist außerdem an seinem formseitigen Ende eine weitere zentrische Bohrung 27 auf, in der mittels einer weiteren kraftschlüssigen Verbindung 28 eine in Richtung auf den Formhohlraum 3 aus dem Kolben 12 herausführende - äußere - Hohlnadel 29 arretiert ist.

Bohrung 27 und äußere Hohlnadel 29 sind derart dimensioniert, daß die innere Hohlnadel 23 zumindest in der äußeren Hohlnadel 29 paßgerecht verschiebbar ist, ohne daß die Bewegung von der Bohrung 27 behindert wird. Andererseits sind der Ausgangskanal 19 der Düse 7 und die Bohrung 6 so gestaltet, daß die äußere Hohlnadel 29 in beiden Bohrungen paßgerecht gleiten kann. Beide Hohlnadeln 23 und 29 sind in ihrer Länge so aufeinander abgestimmt, daß sie im Ruhezustand formseitig auf gleichem Niveau enden, im dargestellten Fall innerhalb der Bohrung 6, bei anderer Düsenanordnung ggf. auch innerhalb des Ausgangskanals 19, jedenfalls aber derart, daß sich vor den Endflächen 30 und 31 beider Hohlnadeln 23 und 29 außerhalb des eigentlichen Formhohlraums 3 ein Teil von zuerst eingespritzter Kunststoffschmelze abspeichern kann. Die Endflächen 30 und 31 sind so ausgebildet, daß sie bei gemeinsamer Verfahrung auf das Niveau der nächstgelegenen Formoberfläche 2 diese weitgehend störungsfrei ergänzen. Das bedeutet insbesondere, daß die Endfläche 30 der inneren Hohlnadel 23 geschlossen ist. Zum Auslaß des zweiten Mediums aus der inneren Hohlnadel 23 in den Formhohlraum 3 bzw. zur Druckentlastung einer Gas- oder Flüssigkeitsfüllung des spritzgegossenen Kunststoffartikels besitzt die innere Hohlnadel 23 dafür unmittelbar hinter ihrer Endfläche 30 eine oder mehrere Ausgangsöffnungen(en) 32, die das zweite Medium weitgehend parallel zu den Formoberflächen 2 und 4 in eine zuerst eingespritzte Kunststoffschmelze eintreten lassen.

Im dargestellten Fall ist der Mündungsbereich der Bohrung 6 mit einer Heizvorrichtung 33 und/oder einer speziellen Wärmeisolierung 34 versehen, mit deren Hilfe der zunächst in der Bohrung 6 abgespeicherte Teil der zuerst eingespritzten Kunststoffschmelze bis zur Ausbildung eines Verschlußpfropfens auf niedrigerer Viskosität gehalten wird als der Rest der zuerst eingespritzten Kunststoffschmelze. Entsprechende Vorrichtungen können ggf. auch im Mündungsbereich des Ausgangskanals 19 der Düse 7 installiert sein.

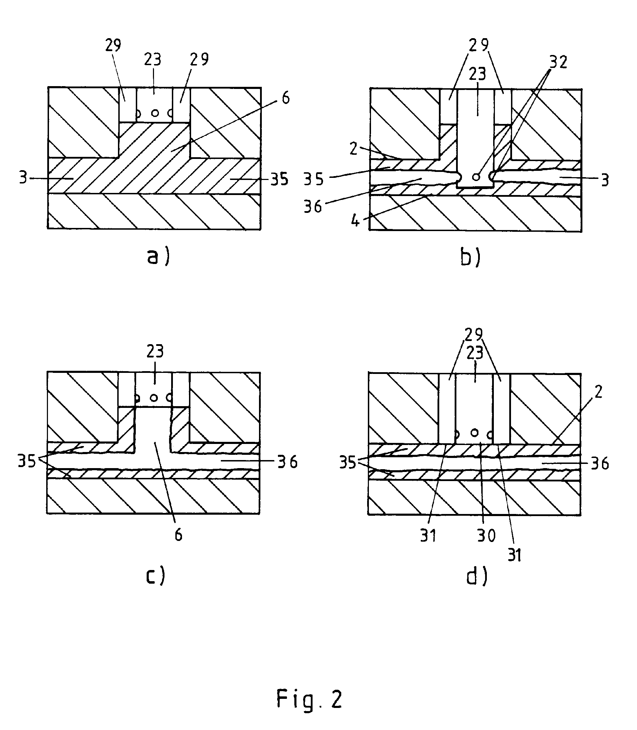

Die Fig. 2 zeigt die Stellung der formseitigen Enden der Hohlnadeln 23 und 29 in verschiedenen Stadien eines Spritzgießvorganges, deren Ausgangsstellung bereits in Fig. 1 dargestellt ist. Ausgehend von diesem Ausgangszustand wird zunächst von einer nicht dargestellten Düse bekannter Art eine erste Kunststoffschmelze 35 in den Formhohlraum 3 eingespritzt, wobei gemäß Fig. 2a bei unveränderter Stellung der Enden der Hohlnadeln 23 und 29 ein Teil dieser ersten Kunststoffschmelze im Mündungsbereich der Bohrung 6 außerhalb des eigentlichen Formhohlraums 3 abgespeichert wird.

Danach wird mittels einer nicht dargestellten Steuerung bekannter Art die Zuleitung 14 in Fig. 1 mit Druck beaufschlagt, wodurch der Kolben 20 gegen die Kraft der Feder 24 soweit in Richtung auf den Formhohlraum 3 verfahren wird, daß die Ausgangsöffnungen 32 der inneren Hohlnadel 23 etwa auf halber Höhe zwischen den Formoberflächen 2 und 4 zum Halten kommen und nun das durch die Zuleitung 14 und die Hohlnadel 23 herantransportierte zweite Medium 36 gemäß Fig. 2b im wesentlichen parallel zu den Formoberflächen 2 und 4 in die zuerst eingespritzte Kunststoffschmelze 35 eingedrückt wird.

Nach dem Einsetzen des Abbindens der zuerst eingespritzten Kunststoffschmelze 35 wird die Zuleitung 14 mittels der nicht dargestellten Steuerung bekannter Art mit der Atmosphäre oder einem etwa unter Atmosphärendruck stehenden Vorratsbehälter bekannter Art verbunden, wodurch das zweite Medium 36 im spritzgegossenen Kunststoffartikel eine Druckentlastung erfährt und gleichzeitig der Kolben 20 und die innere Hohlnadel 23 gemäß Fig. 2c wieder in ihre Ausgangsstellung zurückfahren. Die zuerst eingespritzte Kunststoffschmelze bildet jetzt einen mit dem zweiten Medium 36 unter etwa Atmosphärendruck gefüllten Hohlkörper, wobei ein Teil der Kunststoffschmelze noch immer im Mündungsbereich der Bohrung 6 abgespeichert ist.

Dieser Teil der Kunststoffschmelze 35 wird nun gemäß Fig. 2d auf das Niveau der Formoberfläche 2 heruntergedrückt, indem nach Fig. 1 die zentrische Ausnehmung 11 im Düsenkammerverschluß 10 über die Zuleitung 15 von einer nicht gezeigten Steuerung bekannter Art mit einem pneumatischen oder hydraulischen Druckmedium beaufschlagt und damit der Kolben 12, d.h. gleichzeitig auch der Kolben 20 bzw. die Hohlnadeln 23 und 29, gegen die Kraft der Feder 18 soweit in Richtung der nächstgelegenen Formoberfläche 2 verfahren wird, daß die Endflächen 30 und 31 der Hohlnadeln 23 und 29 die Formoberfläche 2 im wesentlichen störungsfrei ergänzen.

Wenn der so entstandene nahtlose Pfropfen aus dem Material der zuerst eingespritzten Kunststoffschmelze ausreichend abgebunden hat, wird die Zuleitung 15 von der nicht gezeigten Steuerung bekannter Art von der Druckbeaufschlagung entlastet, so daß der Kolben 12 und mit ihm der Kolben 20 sowie die Hohlnadeln 23 und 29 in ihre Ausgangsstellung gemäß Fig. 1 zurückkehren.

Mit dem anschließenden Öffnen der Form und dem Auswerfen des spritzgegossenen Kunststoffartikels ist der Spritzgießvorgang beendet und kann nach dem erneuten Schließen der Form wiederholt werden.

## Patentansprüche

1. Düse (7) für Spritzgießmaschinen zum Einführen eines zweiten Mediums, beispielsweise eines Gases, einer Flüssigkeit oder einer weiteren - schäumbaren oder nicht schäumbaren - Kunststoffschmelze, in das Innere einer bereits teilweise oder vollständig in eine Spritzgießform eingespritzten ersten Kunststoffschmelze, dadurch gekennzeichnet,
daß der formseitige Ausgangskanal (19) der Düse (7) und eine ihn ggf. bis zur Formoberfläche (2) fluchtend fortsetzende Bohrung (6) in dem die Düse tragenden Formwerkzeug (1) eine Anordnung aus zwei konzentrisch angeordneten, sowohl gegenüber der Wand des Ausgangskanals (19) bzw. der Bohrung (6) als auch untereinander paßgerecht in axialer Richtung verschiebbaren Hohlnadeln (23,29) führt, wobei die innere Hohlnadel (23) an ihrem formseitigen Ende verschlossen ist, dafür jedoch in ihrer Seitenwand oberhalb ihres formseitigen Endes eine oder mehrere Ausgangsöffnung(en) (32) aufweist, und die Endflächen (30,31) beider Hohlnadeln (23,29) bei gleichzeitigem Ausfahren auf das Niveau der nächstgelegenen Formoberfläche (2) diese nahezu störungsfrei ergänzen.

2. Düse (7) für Spritzgießmaschinen nach Anspruch 1,
dadurch gekennzeichnet,
daß die innere Hohlnadel (23) in den Formhohlraum (3) ausgefahren werden kann, und zwar vorzugsweise derart, daß die Ausgangsöffnungen (32) etwa auf der mittleren Höhe zwischen den Formoberflächen (2,4) im Bereich des Ausgangskanals (19) bzw. der Bohrung (6) ihren Arbeitspunkt erreichen.

3. Düse (7) für Spritzgießmaschinen nach einem der Ansprüche 1 oder 2,
dadurch gekennzeichnet,
daß die äußere Hohlnadel (29) mindestens bis auf das Niveau der nächstgelegenen Formoberfläche (2) ausgefahren werden kann.

4. Düse (7) für Spritzgießmaschinen nach einem der vorangegangenen Ansprüche 1 bis 3,
dadurch gekennzeichnet,
daß die innere Hohlnadel (23) hydraulisch oder pneumatisch verfahren wird.

5. Düse (7) für Spritzgießmaschinen nach einem der vorangegangenen Ansprüche 1 bis 4,
dadurch gekennzeichnet,
daß die innere Hohlnadel (23) von einem Anschlag aus gegen die Widerstandskraft einer Feder (24) verfahren wird.

6. Düse (7) für Spritzgießmaschinen nach einem der vorangegangenen Ansprüche 1 bis 5,
dadurch gekennzeichnet,
daß die äußere Hohlnadel (29) hydraulisch oder pneumatisch verfahren wird.

7. Düse (7) für Spritzgießmaschinen nach einem der vorangegangenen Ansprüche 1 bis 6,
dadurch gekennzeichnet,
daß die äußere Hohlnadel (29) von einem Anschlag aus gegen die Widerstandskraft einer Feder (18) verfahren wird.

8. Düse (7) für Spritzgießmaschinen nach einem der vorangegangenen Ansprüche 1 bis 7,
dadurch gekennzeichnet,
daß die Wand des Ausgangskanals (19) und/oder der Bohrung (6) mit einer Heizvorrichtung (33) versehen werden kann.

9. Düse (7) für Spritzgießmaschinen nach einem der vorangegangenen Ansprüche 1 bis 8,
dadurch gekennzeichnet,
daß die Wand des Ausgangskanals (19) und/oder der Bohrung (6) mit einer speziellen Wärmeisolierung (34) versehen ist.

10. Düse (7) für Spritzgießmaschinen nach einem der vorangegangenen Ansprüche 1 bis 9,
dadurch gekennzeichnet,
daß sie einstückig in eine mit einem Innengewinde versehene Bohrung (5) im Formwerkzeug ein- bzw. aus einer solchen Bohrung (5) herausgeschraubt werden kann.

## Claims

1. Nozzle (7) for injection moulding machines for introducing a second medium, for example a gas, a liquid or a furtherfoamable or non-foamable - plastics melt into the interior of a first plastics melt already partially or completely injected into an injection mould,
characterized in that
the mould-side outlet channel (19) of the nozzle (7) and a bore (6) which is in the mould (1) bearing the nozzle and runs in flush continuation of said outlet channel (19), where appropriate as far as to the mould surface (2), guide an arrangement of two concentrically arranged hollow needles (23, 29) which are displaceable both with respect to the wall of the outlet channel (19) or the bore (6) and mutually, complementing one another, in the axial direction, the inner hollow needle (23) being closed off on its mould-side end, but having in its side wall above its mould-side end one or more outlet opening(s) (32), and the end faces (30, 31) of both hollow needles (23, 29) on simultaneously extending them to the level of the closest mould surface (2) completing said mould surface (2) almost perfectly.

2. Nozzle (7) for injection moulding machines according to Claim 1,
characterized in that
the inner hollow needle (23) can be extended into the mould hollow space (3), in particular preferably such that the outlet openings (32) reach their operating point approximately at the middle height between the mould surfaces (2, 4) in the region of the outlet channel (19) or of the bore (6).

3. Nozzle (7) for injection moulding machines according to either of Claims 1 or 2,
characterized in that
the outer hollow needle (29) can be extended at least as far as to the level of the closest mould surface (2).

4. Nozzle (7) for injection moulding machines according to one of the preceding Claims 1 to 3,
characterized in that
the inner hollow needle (23) is moved hydraulically or pneumatically.

5. Nozzle (7) for injection moulding machines according to one of the preceding Claims 1 to 4,
characterized in that
the inner hollow needle (23) is moved from a stop in opposition to the resistance force of a spring (24).

6. Nozzle (7) for injection moulding machines according to one of the preceding Claims 1 to 5,
characterized in that
the outer hollow needle (29) is moved hydraulically or pneumatically.

7. Nozzle (7) for injection moulding machines according to one of the preceding Claims 1 to 6,
characterized in that
the outer hollow needle (29) is moved from a stop in opposition to the resistance force of a spring (18).

8. Nozzle (7) for injection moulding machines according to one of the preceding Claims 1 to 7,
characterized in that
the wall of the outlet channel (19) and/or of the bore (6) can be provided with a heating device (33).

9. Nozzle (7) for injection moulding machines according to one of the preceding Claims 1 to 8,
characterized in that
the wall of the outlet channel (19) and/or of the bore (6) is provided with a special thermal insulator (34).

10. Nozzle (7) for injection moulding machines according to one of the preceding Claims 1 to 9,
characterized in that
it can be screwed in one piece into a bore (5) in the mould provided with an internal thread and can be unscrewed from such a bore (5).


## Revendications

1. Buse (7) pour machines de moulage par injection pour l'introduction d'un second fluide, par exemple d'un gaz, d'un liquide ou d'une autre matière plastique fondue - expansible ou non expansible - dans l'intérieur d'une matière plastique fondue déjà injecté: partiellement ou entièrement dans un moule d'injection,
**caractérisée en ce** que
le canal de sortie (19) du côté moule de la buse (7) et un alésage (6) dans le moule (1) portant la buse, qui le prolonge éventuellement en alignement jusqu'à la surface (2) au moule, guide de manière ajustée un agencement de deux aiguilles creuses (23, 29) concentriques déplaçables dans le sens axial par rapport à la paroi du canal de sortie (19) et respectivement à l'alésage (6) aussi bien que l'une par rapport à l'autre, l'aiguille creuse intérieure (23) étant fermée à son extrémité du côté moule mais présentant, dans sa paroi latérale, au-dessus de son extrémité du côté moule, un ou plusieurs orifices de sortie (32) et les faces terminales (30, 31) des deux aiguilles creuses (23, 29) complétant presque sans discontinuité la surface (2) la plus proche du moule lorsqu'elles sortent simultanément jusqu'au niveau de celle-ci.

2. Buse (7) pour machines de moulage par injection selon la revendication 1,

caractérisée en ce que

l'aiguille creuse intérieure (23) peut être sortie dans la cavité (3) du moule, et ce de préférence de telle façon que les orifices de sortie (32) atteignent leur point de fonctionnement sensiblement à mi-hauteur entre les surfaces (2, 4) du moule, dans la région du canal de sortie (19) et respectivement de l'alésage (6),

3. Buse (7) pour machines de moulage par injection selon l'une des revendications 1 ou 2, caractérisée en ce que

l'aiguille creuse extérieure (29) peut être sortie au moins jusqu'au niveau de la surface (2) la plus proche du moule.

4. Buse (7) pour machines de moulage par injection selon l'une des revendications 1 à 3, caractérisée en ce que

l'aiguille creuse intérieure (23) est déplacée de manière hydraulique ou pneumatique.

5. Buse (7) pour machines de moulage par injection selon l'une des revendications 1 à 4, caractérisée en ce que

l'aiguille creuse intérieure (23) est déplacée à partir d'une butée contre la force d'un ressort (24).

6. Buse (7) pour machines de moulage par injection selon l'une des revendications 1 à 5, caractérisée en ce que

l'aiguille creuse extérieure (29) est déplacée de manière hydraulique ou pneumatique.

7. Buse (7) pour machines de moulage par injection selon l'une des revendications 1 à 6, caractérisée en ce que

l'aiguille creuse extérieure (29) est déplacée à partir d'une butée contre la force d'un ressort (18).

8. Buse (7) pour machines de moulage par injection selon l'une des revendications 1 à 7, caractérisée en ce que

la paroi du canal de sortie (19) et(ou de l'alésage (6) peut être équipée d'un dispositif de chauffage (33),

9. Buse (7) pour machines de moulage par injection selon l'une des revendications 1 à 8, caractérisée en ce que

la paroi du canal de sortie (19) et(ou de l'alésage (6) peut être munie d'une isolation thermique (34) spéciale,

10. Buse (7) pour machines de moulage par injection selon l'une des revendications 1 à 9, caractérisée en ce qu'elle

peut être vissée en une seule pièce dans un alésage taraudé (5) dans le moule et respectivement dévissée d'un tel alésage (5),

Fig.1

Fig. 2